# EUROPÄISCHE PATENTSCHRIFT

(11) **EP 2 504 148 B1**
(45) Veröffentlichungstag und Bekanntmachung des Hinweises auf die Patenterteilung: **17.06.2020**
(21) Anmeldenummer: 10805388.5
(22) Anmeldetag: 08.11.2010
(51) Int. Cl.: B29C 49/64, B29C 49/68, B29C 49/28

(54) **VERFAHREN ZUR BLASFORMUNG VON BEHÄLTERN**
METHOD FOR BLOW-MOLDING CONTAINERS
PROCÉDÉ DE MOULAGE PAR SOUFFLAGE DE RÉCIPIENTS

(30) Priorität: 26.11.2009 DE 102009057021
(43) Veröffentlichungstag der Anmeldung: 03.10.2012
(73) Patentinhaber: KHS Corpoplast GmbH, 22145 Hamburg (DE)
(72) Erfinder: ZOCHER, Tara, 22761 Hamburg (DE); BALKAU, Karl-Heinz, 22113 Oststeinbek (DE); RASCH, Jens-Peter, 22926 Ahrensburg (DE); ULUTÜRK, Deniz, 20537 Hamburg (DE); MATTHIESEN, Martin, 22359 Hamburg (DE); LEWIN, Frank, 22889 Tangstedt (DE); LINKE, Michael, 22159 Hamburg (DE)
(74) Vertreter: Hausfeld, Norbert
(86) Internationale Anmeldenummer: PCT/DE2010/001318
(87) Internationale Veröffentlichungsnummer: WO 2011/063784

(56) Entgegenhaltungen:
- AT-B- 412 543
- DE-A1-102007 031 210
- DE-T2- 60 030 327
- DE-U1- 20 020 150
- US-A- 5 714 109
- US-A- 6 005 223
- US-A1- 2007 085 243
- US-A1- 2008 102 148

## Beschreibung

Die Erfindung betrifft ein Verfahren zur Blasformung von Behältern, bei dem ein Vorformling aus einem thermoplastischen Material nach einer thermischen Konditionierung entlang eines Transportweges im Bereich einer Heizstrecke innerhalb einer Blasform durch Blasdruckeinwirkung in den Behälter umgeformt wird, und bei dem der Transportweg mindestens bereichsweise tunnelartig begrenzt wird.

Die Offenbarung betrifft darüber hinaus eine Vorrichtung zur Blasformung von Behältern aus einem thermoplastischen Material, die mindestens eine entlang eines Transportweges eines Vorformlings angeordnete Heizstrecke und eine mit einer Blasform versehene Blasstation aufweist, sowie bei der der Transportweg mindestens bereichsweise tunnelartig begrenzt ist.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Vor einer Durchführung der Beheizung werden die Vorformlinge typischerweise auf Transportdorne aufgesteckt, die den vorformling entweder durch die gesamte Blasmaschine transportieren oder die lediglich im Bereich der Heizeinrichtung umlaufen. Bei einer stehenden Beheizung der Vorformlinge derart, daß die Mündungen der Vorformlinge in lotrechter Richtung nach unten orientiert sind, werden die Vorformlinge üblicherweise auf ein hülsenförmiges Halterungselement des Transportdornes aufgesteckt. Bei einer hängenden Beheizung der Vorformlinge, bei der diese mit ihren Mündungen in lotrechter Richtung nach oben orientiert sind, werden in der Regel Spreizdorne in die Mündungen der Vorformlinge eingeführt, die die Vorformlinge festklemmen.

Zur Verkürzung der erforderlichen Heizzeit ist es bereits bekannt, im Bereich der Heizstrecke NIR-Strahler zu verwenden, deren Heizstrahlung in einem nahen Infrarotbereich emittiert wird, typischerweise mit Wellenlängen zwischen 0,4 und 1 Mikrometer. Zur Optimierung der Energieausbeute werden derartige Heizstrecken mit einer Vielzahl von Spiegelflächen ausgestattet, um eine Absorption der Wärmestrahlung durch Bauteile der Heizstrecke möglichst zu vermeiden oder zumindest stark zu reduzieren.

Typischerweise werden die tunnelartigen Heizstrecken seitlich vom Gehäuse einer Halterung für die Heizelemente sowie einem diesem Gehäuse gegenüberliegenden Reflektor begrenzt. In vertikaler Richtung erfolgt eine Begrenzung durch einen Boden oder einen Deckel, je nachdem, ob die Vorformlinge mit ihren Mündungen in lotrechter Richtung nach oben oder nach unten orientiert durch die Heizstrecke hindurch transportiert werden. Innerhalb des Heiztunnels befindet sich Luft, die durch die auftreffende Wärmestrahlung erhitzt wird und durch die die Vorformlinge während ihrer Beheizung hindurch transportiert werden. Die Innenraumdimensionierung des Heiztunnels ist typischerweise unabhängig von der Dimensionierung der Vorformlinge, so dass bei relativ kleinen Vorformlingen ein relativ großes Innenvolumen der Heizstrecke sowie entsprechend relativ große diesem Innenraum zugewandte Begrenzungsflächen des Heiztunnels vorliegen.

Aus der AT 412 543 B, die den Oberbegriff des Anspruchs 1 offenbart, ist ein Heizkanal bekannt mit einem Reflektor, der in seinem unteren Bereich einen Bodenreflektor ausbildet. Der Reflektor ist in der Höhe verstellbar, so dass im weiteren Sinne auch der Bodenreflektor höhenverstellbar ist.

Die US 6 005 223 A zeigt einen Heizkasten, der mittels Stellschrauben in horizontaler und vertikaler Richtung verstellbar ist. Weiterhin ist auch hier ein höhenverstellbarerb Reflektor vorgesehen.

Die US 2008/102148 A1 offenbart einen in den Heizraum ragend installierten Bodenreflektor. Der Reflektor soll dabei dort montiert werden, wo sonst üblicherweise ein Heizelement montiert wird und kann damit in unterschiedlichen Höhenpositionen vorgesehen werden.

Aufgabe der vorliegenden Erfindung ist es, ein Verfahren der einleitend genannten Art derart zu verbessern, dass die erforderliche Heizenergie vermindert wird.

Diese Aufgabe wird durch die Merkmale des Anspruchs 1 gelöst.

Weiterhin beschriben ist eine Vorrichtung, bei der die erforderliche Heizenergie vermindert wird.

Es wird somit die Größe der Querschnittfläche der tunnelartigen Heizstrecke und somit das Innenvolumen der Heizstrecke an die Größe der Vorformlinge angepasst. Es wurde erkannt, dass zum einen für die Beheizung des im Heiztunnel befindlichen Luftvolumens eine entsprechende Energiemenge erforderlich ist und dass durch die Transportbewegung der Vorformlinge durch die Heizstrecke hindurch und an den die Vorformlinge halternden Transportelementen vorbei ein ständiger Gasaustausch mit der Umgebung stattfindet, der zu einer permanenten Zuführung von kühler Umgebungsluft führt. Darüber hinaus ermöglicht die Verkleinerung der Querschnittfläche auch eine entsprechende Verminderung der Größe der inneren Begrenzungsfläche des Heiztunnels, so dass eine bessere Nutzung der Heizenergie sichergestellt ist. Darüber hinaus wird eine unerwünschte Aufheizung der Bauelemente der Heizstrecke vermieden, der ansonsten durch eine aktive Kühlung entgegengewirkt werden müsste. Die Energie für eine derartige Kühlung kann somit eingespart oder zumindest vermindert werden.

Schließlich zeigt es sich, dass eine Verminderung des Innenvolumens der Heizstrecke auch zu einer Verbesserung der Qualität der Beheizung der Vorformlinge führt, da ein nur schwer kontrollierbarer Wärmeübergang zwischen der beheizten Luft in der Heizstrecke und dem Material der Vorformlinge vermindert wird bzw. zumindest besser vorher gesehen werden kann.

Eine einfache Anpassbarkeit wird dadurch bereitgestellt, dass eine in lotrechter Richtung untere Begrenzung der Querschnittfläche zur Veränderung der Größe der Querschnittfläche durch Einsetzen eines Füllelements höhenveränderlich angeordnet wird.

Eine Überhitzung von Bauelementen kann erfindungsgemäß dadurch vermieden werden, dass das zur Veränderung der Größe der Querschnittfläche verwendete Füllelement luftgekühlt wird.

Gemäß einer Ausführungsform ist vorgesehen, dass mindestens eine Seitenwand der Heizstrecke in einer horizontalen Richtung positionsveränderlich angeordnet wird.

Insbesondere ist daran gedacht, dass ein die Querschnittfläche begrenzender Reflektor positionsveränderlich angeordnet wird.

Ebenfalls ist es möglich, dass ein die Querschnittfläche begrenzender Heizkasten in horizontaler Richtung positionsveränderlich angeordnet wird.

Eine verlustarme Beheizung der Vorformlinge wird dadurch unterstützt, dass von einem im Bereich der Heizstrecke angeordneten Heizstrahler eine NIR-Strahlung generiert wird.

Strahlungsverluste können dadurch vermindert werden, dass der Querschnittfläche zugewandte Oberflächen der Heizstrecke mindestens bereichsweise mit reflektierenden Eigenschaften versehen werden.

Eine einfache Konstruktion wird dadurch unterstützt, dass die Größe der Querschnittfläche manuell verändert wird.

In den Zeichnungen sind Ausführungsbeispiele schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine perspektivische Darstellung eines Heizmoduls im Bereich der Heizstrecke,
- Fig. 6: einen schematischen Querschnitt durch das Heizmodul gemäß Fig. 5 mit zugeordnetem zu beheizenden Vorformling,
- Fig. 7: die Anordnung gemäß Fig. 6 nach einer Verkleinerung des Innenraumes der Heizstrecke und
- Fig. 8: die Anordnung gemäß Fig. 7 nach einer nochmaligen Verkleinerung des Innenraumes der Heizstrecke.

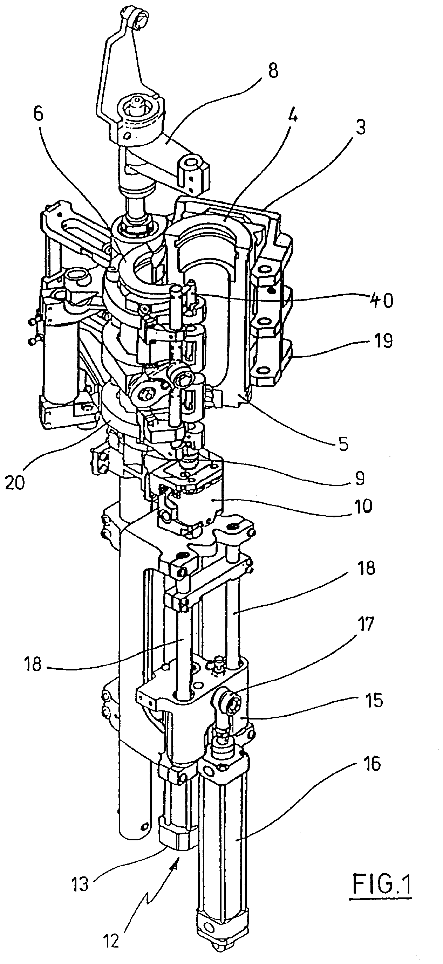

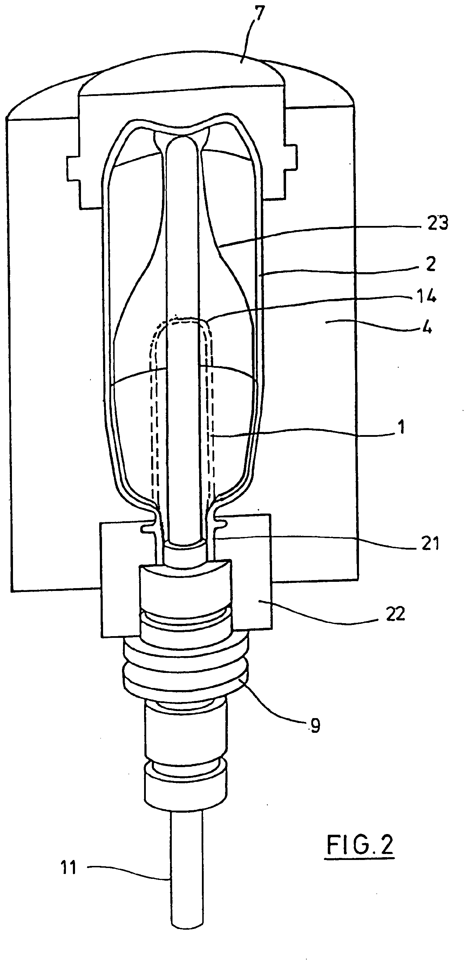

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (40).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

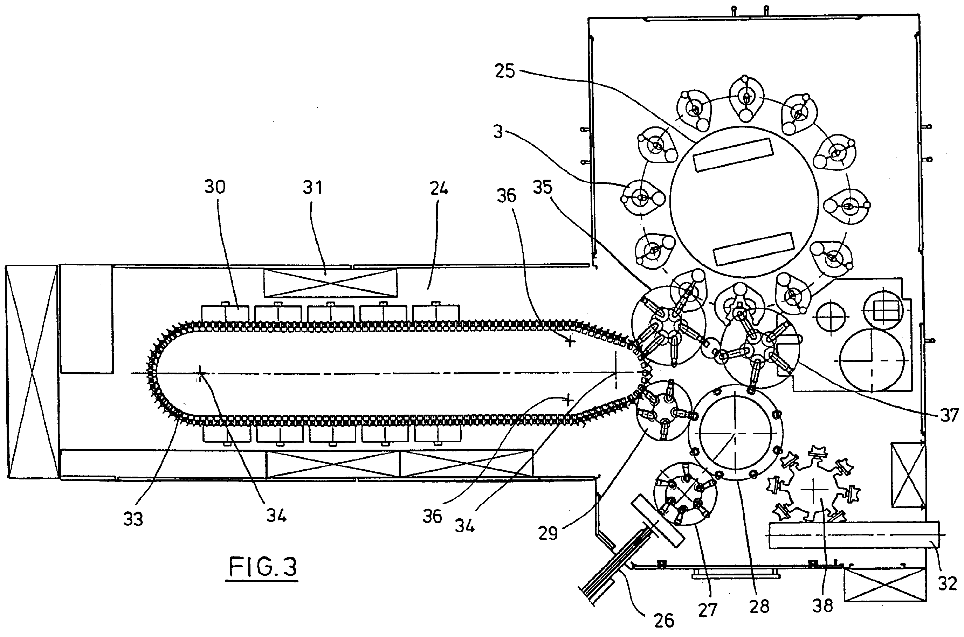

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

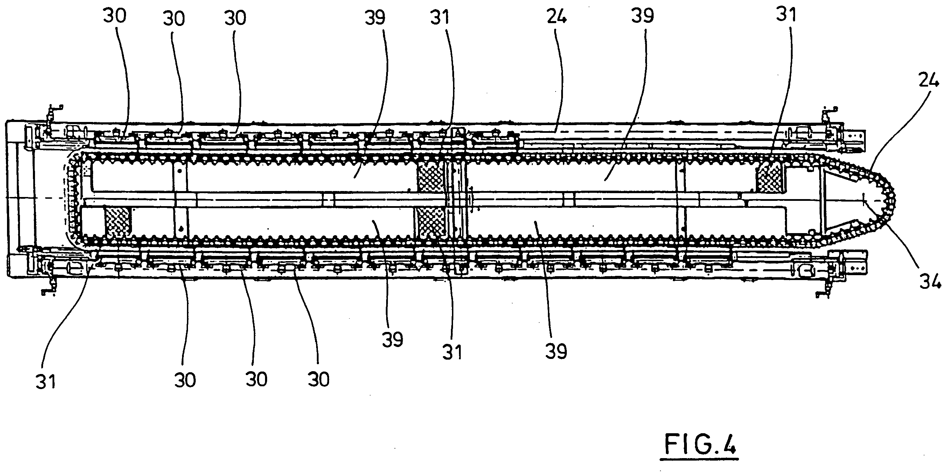

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

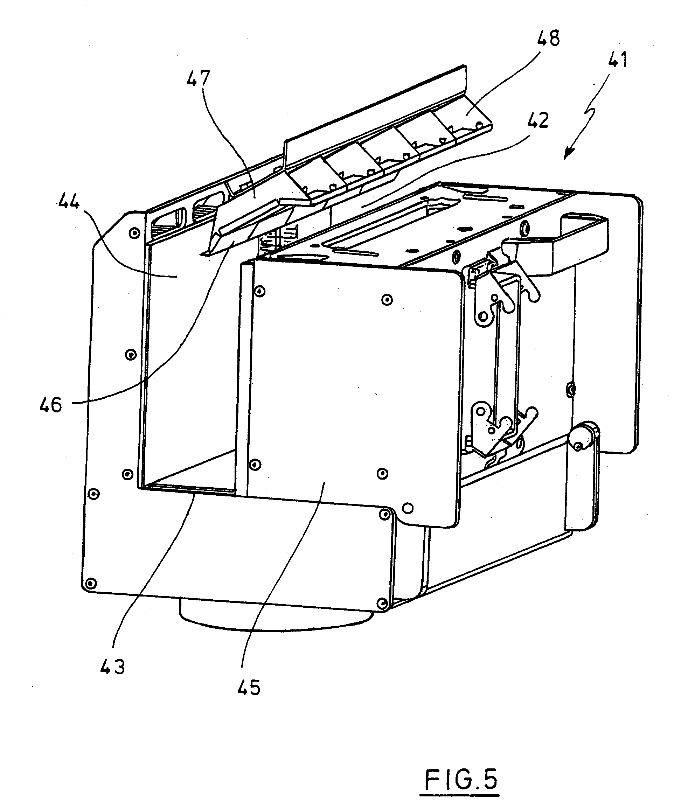

Fig. 5 zeigt eine perspektivische Darstellung eines Heizmoduls (41), das zur Anordnung im Bereich der Heizstrecke (24) vorgesehen ist. Das Heizmodul (41) ist mit einem Heizkanal (42) versehen, durch den die Vorformlinge (1) hindurchbewegt werden. Der Heizkanal (42) ist im wesentlichen entsprechend einem U-Profil ausgebildet und weist einen geschlossenen Boden (43) auf. Seitlich wird der Heizkanal (42) von einem Seitenreflektor (44) sowie von einem Heizkasten (45) begrenzt. Im Bereich des Heizkastens (45) sind die in Fig. 5 nicht erkennbaren Heizstrahler (30) positioniert.

Dem Boden (43) gegenüberliegend wird der Heizkanal (42) von einem Reflektor (46) begrenzt. Der Reflektor (46) ist beim dargestellten Ausführungsbeispiel als eine dem Heizkanal (42) zugewandte Wandung eines Luftleitelementes (47) ausgebildet, das einen Strömungskanal (48) begrenzt.

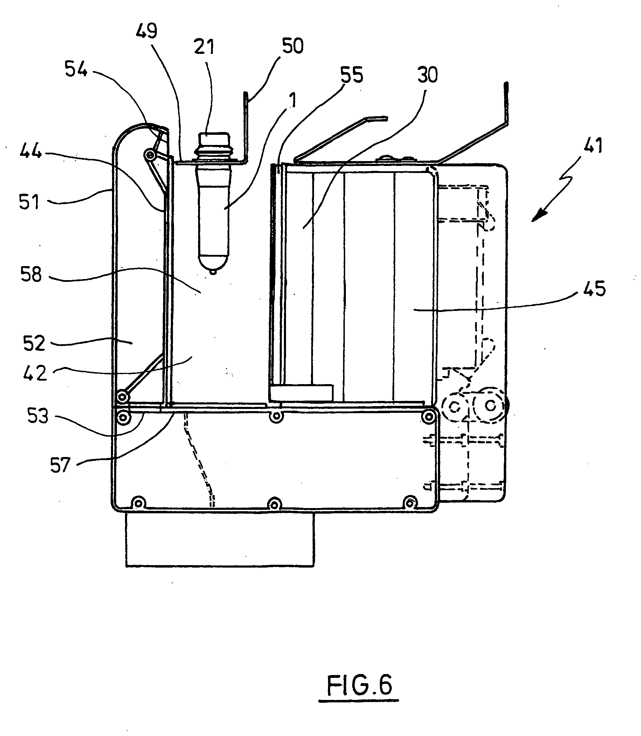

Fig. 6 zeigt einen schematischen Querschnitt durch das Heizmodul (41) gemäß Fig. 5 mit zusätzlich eingezeichnetem Vorformling (1) und Halteelement (49). Das Halteelement (49) weist einen Träger (50) auf. Der Vorformling (1) kann vom Halteelement (49) in einer definierten Positionierung durch den Heizkanal (42) hindurch transportiert werden.

Aus Fig. 6 ist ebenfalls erkennbar, dass der Seitenreflektor (44) von einem Kühlkörper (51) gehaltert ist, der einen Strömungskanal (52) aufweist. In den Strömungskanal (52) strömt durch eine Einströmöffnung (53) hindurch Kühlluft ein und tritt durch eine Ausströmöffnung (54) wieder aus dem Strömungskanal (52) aus. Insbesondere ist daran gedacht, die Einströmöffnung (53) in einem in lotrechter Richtung unteren Bereich des Strömungskanals (52) und die Ausströmöffnung (54) in einem in lotrechter Richtung oberen seitlichen Bereich des Strömungskanals (52) anzuordnen. Eine Höhenpositionierung der Ausströmöffnung (54) erfolgt vorzugsweise derart, dass diese auf einem Höhenniveau wie der Mündungsabschnitt (21) des Vorformlings (1) angeordnet ist. Die aus dem Kühlkörper (51) austretende Kühlluft umströmt somit den Mündungsabschnitt (21) und führt zu dessen Kühlung.

Im Bereich des Heizkastens (45) sind eine Mehrzahl von Heizstrahlern (30) in lotrechter Richtung übereinander angeordnet. Zur Realisierung einer frequenzselektiven Beheizung ist zwischen den Heizstrahlern (30) und dem Heizkanal (42) eine Filterscheibe (55) angeordnet, die vorzugsweise aus einem geeigneten Quarzglas besteht. Gemäß einer vorteilhaften Ausführungsform werden sowohl die Heizstrahler (30) als auch die Filterscheibe (55) von Kühlluft temperiert.

Im Bereich einer der Filterscheibe (55) abgewandten Richtung hinter den Heizstrahlern (30) ist ein Strahlerreflektor (56) angeordnet, der vorzugsweise eine profilierte Reflektoroberfläche aufweist. Die Reflektoroberfläche ist vorzugsweise derart strukturiert, dass eine Rückstrahlung in die Heizstrahler (30) hinein vermieden wird und die Ausbildung einer geeigneten Wärmeverteilung im Bereich des Heizkanals (42) unterstützt wird.

Das Heizmodul (41) gemäß der Ausführungsform in Fig. 6 ist dafür vorgesehen, die Vorformlinge (1) in einer räumlichen Orientierung zu beheizen, bei der die Vorformlinge (1) mit ihrem Mündungsabschnitt (21) in lotrechter Richtung nach oben angeordnet sind. Der Träger (50) für die Vorformlinge (1) ist deshalb in einem in lotrechter Richtung oberen Bereich des Heizkanals (42) bzw. oberhalb des Heizkanals (42) angeordnet. Der Träger (50) ist hierbei mit einer nicht dargestellten Transporteinrichtung verbunden, beispielsweise einer angetriebenen Transportkette.

Zur Bereitstellung des tunnelartigen Heizkanals (42) ist der Heizkanal (42) in lotrechter Richtung nach unten von einem Boden (57) begrenzt. Fig. 6 zeigt den Heizkanal (42) mit einer Querschnittfläche (58), die einer konstruktiv vorgesehenen maximalen Ausdehnung des Heizkanals (42) entspricht.

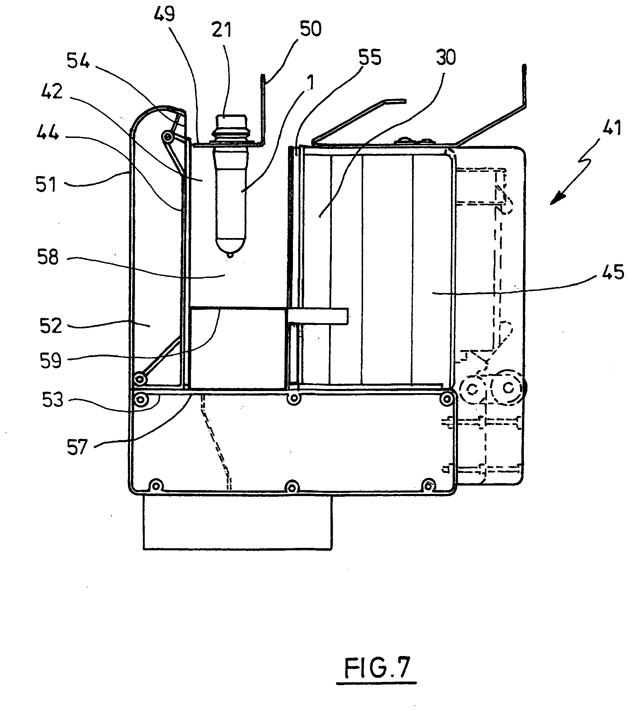

Fig. 7 zeigt das Heizmodul (41) gemäß Fig. 6 nach einer Verkleinerung der Querschnittfläche (58). Erfindungsgemäß erfolgte die Verkleinerung der Querschnittfläche (58) durch das Einsetzen eines Füllelementes (59) in den Heizkanal (42). Das Füllelement (59) ist in diesem Fall kastenartig ausgebildet. Durch einen Innenraum des Füllelementes (59) kann Kühlluft hindurch geleitet werden.

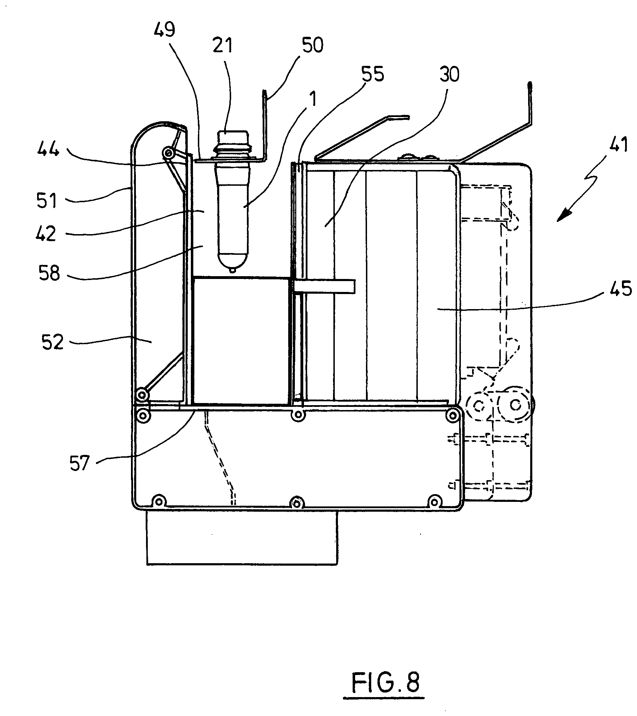

Fig. 8 zeigt eine Ausführungsform, bei der ein relativ zur Darstellung in Fig. 7 größeres Füllelement (59) verwendet wird. Die Querschnittfläche (58) wurde hierdurch soweit verkleinert, dass nahezu der gesamte Bereich des Heizkanals (42) unterhalb des Vorformlings (1) vom Füllelement (59) ausgefüllt ist.

Bei der Anordnung von Füllelementen gemäß Fig. 7 oder Fig. 8 im Bereich des Heizkanals (42) werden erfindungsgemäß diejenigen Heizstrahler (30), die auf einem Höhenniveau neben dem Füllelement (59) angeordnet sind, vollständig abgeschaltet.

Ergänzend zur vertikalen Veränderung der Größe des Heizkanals (42) durch durch die Verwendung geeigneter Trennelemente ist es auch möglich, eine horizontale Positionierbarkeit des Seitenreflektors (44) oder des Kühlkörpers (51) gemeinsam mit dem Seitenreflektor (44) vorzusehen. Ebenfalls ist es möglich, eine entsprechende horizontale Positionierbarkeit des Heizkastens (45) und/oder der Filterscheibe (55) vorzusehen, um die Größe der Querschnittfläche (58) zu beeinflussen.

In technologischer Hinsicht erweist sich jedoch insbesondere die vertikale Anpassung der Größe der Querschnittfläche (58) von Bedeutung, da sich die zu beheizenden Vorformlinge (1) im Wesentlichen hinsichtlich ihrer Längsausdehnung und weniger hinsichtlich ihres Durchmessers voneinander unterscheiden.

Vorteilhafterweise wird die dem Vorformling (1) zugewandte Oberfläche des Füllelementes (59) mit reflektierenden Eigenschaften versehen, insgesamt wird durch die Verwendung des Füllelementes (59) die Gesamtgröße der dem Vorformling (1) zugewandten reflektierenden Flächen gegenüber der Anordnung in Fig. 6 vermindert. Jede Strahlungsreflektion führt zu Reflektionsverlusten und vermindert hierdurch die tatsächlich zur Verfügung stehende Heizleistung.

Die Veränderung der Größe der Querschnittfläche (58) erfolgt vorzugsweise manuell durch eine Positionsveränderung der betreffenden Bauelemente bzw. durch ein Einsetzen des oder der Füllelemente (59). Grundsätzlich ist jedoch auch eine automatische Verstellung denkbar, beispielsweise in Abhängigkeit von Eingaben über ein Bedienprogramm der Blasmaschine.

Bevorzugt ist daran gedacht, dass eine in lotrechter Richtung untere Begrenzung des Heizkanals (42) höhenveränderlich angeordnet ist.

Das Füllelement (59) bzw. ein vergleichbares Trennelement können mit einer Luftkühlung versehen sein.

Zur Veränderung der Größe der Querschnittfläche (58) kann mindestens eine Seitenwand des Heizkanals (42) in einer vertikalen Richtung positionierbar angeordnet sein.

Insbesondere kann der Reflektor (46) in einer horizontalen Richtung positionierbar angeordnet sein.

Ebenfalls ist es möglich, den Heizkasten (45) in einer horizontalen Richtung positionierbar anzuordnen.

Die Heizstrahler (30) sind bevorzugt zur Generierung einer NIR-Strahlung ausgebildet. Dies ist eine Strahlung im nahen Infrarot-Bereich.

Vorzugsweise werden der Querschnittfläche (58) zugewandte Oberflächen und/oder eine Oberfläche des Füllelementes (59) reflektierend ausgebildet.

Zweckmäßigerweise ist eine manuelle Positionierbarkeit oder Verstellbarkeit des Füllelementes (59) bzw. entsprechender Trennelemente vorgesehen.

## Patentansprüche

1. Verfahren zur Blasformung von Behältern (2), bei dem ein Vorformling (1) aus einem thermoplastischen Material nach einer thermischen Konditionierung entlang eines Transportweges im Bereich einer Heizstrecke (24) innerhalb einer Blasform (4) durch Blasdruckeinwirkung in den Behälter (2) umgeformt wird, und bei dem der Transportweg mindestens bereichsweise tunnelartig begrenzt wird, wobei eine quer zum Transportweg angeordnete Querschnittfläche (58) der Heizstrecke (24) in Abhängigkeit von einer Dimensionierung der zu beheizenden Vorformlinge (1) derart verändert wird, dass kleineren Vorformlingen (1) eine kleinere Querschnittfläche (58) als größeren Vorformlingen (1) zugeordnet wird, **dadurch gekennzeichnet, dass** zur Verkleinerung der Größe der Querschnittfläche (58) eines Heizkanals (42) ein kastenartiges Füllelement (59) in den Heizkanal (42) eingesetzt wird und diejenigen Heizstrahler (30), die auf einem Höhenniveau neben dem Füllelement (59) angeordnet sind, vollständig abgeschaltet werden und wobei das zur Veränderung der Größe der Querschnittfläche (58) verwendete Füllelement (59) luftgekühlt wird.

2. Verfahren nach Anspruch 1, **dadurch gekennzeichnet, dass** eine in lotrechter Richtung untere Begrenzung der Querschnittfläche (58) zur Veränderung der Größe der Querschnittfläche (59) höhenveränderlich angeordnet wird.

3. Verfahren nach einem der Ansprüche 1 oder 2, **dadurch gekennzeichnet, dass** mindestens eine Seitenwand der Heizstrecke (24) in einer horizontalen Richtung positionsveränderlich angeordnet wird.

4. Verfahren nach Anspruch 3, **dadurch gekennzeichnet, dass** ein die Querschnittfläche (58) begrenzender Reflektor (46) positionsveränderlich angeordnet wird.

5. Verfahren nach einem der Ansprüche 1 bis 4, **dadurch gekennzeichnet, dass** ein die Querschnittfläche (58) begrenzender Heizkasten (45) in horizontaler Richtung positionsveränderlich angeordnet wird.

6. Verfahren nach einem der Ansprüche 1 bis 5, **dadurch gekennzeichnet, dass** von einem im Bereich der Heizstrecke (24) angeordneten Heizstrahler (30) eine NIR- Strahlung generiert wird.

7. Verfahren nach einem der Ansprüche 1 bis 6 , **dadurch gekennzeichnet, dass** der Querschnittfläche (58) zugewandte Oberflächen der Heizstrecke (24) mindestens bereichsweise mit reflektierenden Eigenschaften versehen werden.

8. Verfahren nach einem der Ansprüche 1 bis 7, **dadurch gekennzeichnet, dass** die Größe der Querschnittfläche (58) manuell verändert wird.

## Claims

1. A method for blow moulding containers (2), in the case of which a preform (1) made of a thermoplastic material is formed into the container (2) after a thermal conditioning along a transport path in the region of a heating section (24) inside a blow mould (4) under the effect of blowing pressure, and in the case of which the transport path is limited in a tunnel-like manner at least in some regions, wherein a cross-sectional surface (58) of the heating section (24) arranged transversely to the transport path is changed in such a way as a function of a dimensioning of the preforms (1) to be heated that a smaller cross-sectional surface (58) is assigned to smaller preforms (1) than to larger preforms (1),
**characterised in that**
- to reduce the size of the cross-sectional surface (58) of a heating duct (42), a box-like filling element (59) is inserted into the heating duct (42), and those radiant heaters (30), which are arranged at a height level next to the filling element (59), are turned off completely, and wherein the filling element (59) used to change the size of the cross-sectional surface (58) is air-cooled.

2. The method according to claim 1, **characterised in that** a lower limitation of the cross-sectional surface (58) in the perpendicular direction is arranged in a height-adjustable manner to change the size of the cross-sectional surface (59).

3. The method according to any one of claims 1 or 2, **characterised in that** at least one side wall of the heating section (24) is arranged in a position-variable manner in a horizontal direction.

4. The method according to claim 3, **characterised in that** a reflector (46) limiting the cross-sectional surface (58) is arranged in a position-variable manner.

5. The method according to any one of claims 1 to 4, **characterised in that** a heater box (45) limiting the cross-sectional surface (58) is arranged in a position-variable manner in the horizontal direction.

6. The method according to any one of claims 1 to 5, **characterised in that** a radiant heater (30) arranged in the region of the heating section (24) generates an NIR radiation.

7. The method according to any one of claims 1 to 6, **characterised in that** surfaces of the heating section (24) facing the cross-sectional surface (58) are provided at least in some regions with reflective properties.

8. The method according to any one of claims 1 to 7, **characterised in that** the size of the cross-sectional surface (58) is changed manually.

## Revendications

1. Procédé de moulage par soufflage de récipients (2), dans le cadre duquel une préforme (1) en un matériau thermoplastique, après un conditionnement thermique le long d'un parcours de transport dans une section de chauffage (24), est transformée en un récipient (2) à l'intérieur d'un moule de soufflage (4) sous l'action d'une pression de soufflage et dans le cadre duquel le parcours de transport est, en partie au moins, délimité en forme de tunnel, une section (58) de la zone de chauffage transversale par rapport au parcours de transport étant modifiée en fonction d'un dimensionnement des préformes (1) à chauffer de façon à ce que des préformes (1) de dimension plus petites soient affectées à une section transversale (58) plus petite que pour les préformes (1) plus grandes, **caractérisé en ce que** la réduction de la dimension de la section transversale (58) d'un canal de chauffage (42) est obtenue au moyen d'un élément de garniture en forme de caisson inséré dans le canal de chauffage (42), les radiateurs de chauffage (30) agencés à un niveau de hauteur à côté de l'élément de garniture (59) étant entièrement mis hors circuit et l'élément de garniture (59) utilisé pour réduire la dimension de la section transversale (58) étant refroidi par air.

2. Procédé selon la revendication 1, **caractérisé en ce qu'**une délimitation verticalement inférieure de la section transversale (58) est agencée de façon à pouvoir être déplacée en hauteur pour modifier la dimension de la section transversale (59).

3. Procédé selon l'une des revendications 1 ou 2, **caractérisé en ce qu'**au moins une paroi latérale de la section de chauffage (24) est agencée de façon à pouvoir modifier sa position en sens horizontal.

4. Procédé selon la revendication 3, **caractérisé en ce qu'**un réflecteur (46) limitant la section transversale (58) est agencé de façon à pouvoir modifier sa position.

5. Procédé selon l'une des revendications 1 à 4, **caractérisé en ce qu'**un caisson chauffant (45) limitant la section transversale (58) est agencé de façon à pouvoir modifier sa position en sens horizontal.

6. Procédé selon l'une des revendications 1 à 5, **caractérisé en ce qu'**un rayonnement infrarouge proche est généré par un radiateur de chauffage (30) placé dans la zone de la section de chauffage (24).

7. Procédé selon l'une des revendications 1 à 6, **caractérisé en ce que** les surfaces de la section de chauffage (24) tournées vers la section transversale (58) sont, en partie au moins, dotées de propriétés réfléchissantes.

8. Procédé selon l'une des revendications 1 à 7, **caractérisé en ce que** la dimension de la section transversale (58) peut être modifiée manuellement.
